Europäisches Patentamt

European Patent Office

Office européen des brevets

(11) Veröffentlichungsnummer: **0 163 805**
A1

# EUROPÄISCHE PATENTANMELDUNG

(21) Anmeldenummer: 85100532.2

(22) Anmeldetag: 19.01.85

(51) Int. Cl.⁴: **C 08 J 5/04,** B 32 B 15/14,
C 23 C 18/32, C 23 C 18/20,
C 25 D 3/12, C 25 D 5/56,
B 64 D 45/02, B 64 C 1/00

(30) Priorität: 07.06.84 DE 3421123

(43) Veröffentlichungstag der Anmeldung: 11.12.85
Patentblatt 85/50

(84) Benannte Vertragsstaaten: CH DE FR GB IT LI NL

(71) Anmelder: BAYER AG, Konzernverwaltung RP
Patentabteilung, D-5090 Leverkusen 1 Bayerwerk (DE)

(72) Erfinder: Ebneth, Harold, Dr.,
Berta-von-Suttner-Strasse 61, D-5090 Leverkusen 1 (DE)
Erfinder: Wolf, Gerhard-Dieter, Dr.,
Wilhelm-Busch-Strasse 29, D-4047 Dormagen 5 (DE)
Erfinder: Giesecke, Henning, Dr.,
Walter-Flex-Strasse 18, D-5090 Leverkusen 1 (DE)

(54) Verbundmaterial.

(57) Für den Blitzschutz im Flugkörperbau eignen sich hervorragend Verbundmaterialien aus mehrlagigen Fasermatten in einer Kunststoffmatrix, wobei die Fasern der äußeren Mattenauflage mit 80–200 g/m² Nickel belegt sind.

Geeignetes Fasermaterial besteht aus Kohlenstoff- oder Aramidfasern.

EP 0 163 805 A1

BAYER AKTIENGESELLSCHAFT    5090 Leverkusen, Bayerwerk
Konzernverwaltung RP
Patentabteilung                  K/Kü-c

## Verbundmaterial

Die Erfindung betrifft ein Verbundmaterial aus mehrlagigen Fasermatten in einer Kunststoffmatrix und dessen Verwendung als Blitzschutz, insbesondere im Flugkörperbau.

Im Flugzeugbau werden aus Gewichtseinsparungsgründen Verbundteile aus Aramid-Filamentgarngeweben und/oder Kohlenstoff-Filamentgarngeweben in Verbindung mit Epoxidharzen bzw. Polyimid- oder Maleinimidharzen eingesetzt (25. National SAMPE-Symposium, San Diego, CA., May 6-8, 1980). Bekannt sind solche Teile für Landeklappen, Seitenleitwerk, Höhenruder und ähnliches; in Zukunft sollen ganze Bausegmente aus diesen Verbundwerkstoffen hergestellt werden.

Als gravierendster Nachteil solcher Verbundbauteile aus Kunstharzen und Verstärkungsfasern wird ein nicht ausreichender Blitzschutz angesehen. Blitze strahlen kurzzeitig hochfrequente elektromagnetische Wellen bis in den 1 GHz-Bereich ab.

Le A 23 161-Ausland

Außerdem zeigen faserverstärkte Bauteile aus Kunststoff am Flugzeug (insbesondere beim Durchfliegen von Schnee und Hagel und bei Sandstürmen) eine überraschend hohe elektrostatische Aufladung. Wegen des Kunststoffes ist im Flugzeug ein Schutz der Leitungen und elektronischen Geräte gegen eindringende elektromagnetische Wellenstrahlung nicht gegeben.

Aufgabe der Erfindung ist es, ein Material herzustellen, das einerseits so leicht ist, daß seine Verwendung gegenüber Metall zu einer Gewichtsersparnis des Bauteils führt, und das andererseits eine so hohe Leitfähigkeit hat, daß ein Blitzschutz gewährleistet ist.

Es sind aus der Literatur eine Reihe von Vorschlägen bekannt, wie ein Blitzschutz von Flugzeug-Verbundbauteilen erreicht werden könnte. So wird beispielsweise in der DOS 31 44 653 die Verwendung eines mit Aluminium beschichteten Faden-Verbundmaterials vorgeschlagen. Die DOS 31 39 313 beschreibt allgemein, daß man metallisiertes Aramidgewebe zum Blitzschutz von Flugzeugteilen einsetzen könnte.

In der Technik haben diese Verfahren aber bisher keine Anwendung gefunden. Um Verbundwerkstoffe im Flugzeugbau mit einem Blitzschutz zu versehen, verwendet man ausschließlich Aluminium entweder in Form von Aluminiumblechen oder durch Flammsprühen von Aluminium auf die Verbundteile. Um einen ausreichenden Schutz zu erreichen, müssen dabei Aluminiummengen von mehreren 100 g pro m² aufgetragen werden. Das hat den Nachteil, daß ein großer Teil der Gewichtseinsparung bei Verwendung eines Verbundmaterials wieder verloren geht.

<u>Le A 23 161</u>

- 3 -

Erfindungsgemäß kann nun eine drastische Gewichtsverringerung bei Erhalt der Blitzschutzeigenschaften durch ein Verbundmaterial erreicht werden, das im wesentlichen Matten aus Kohlenstoff-enthaltendem Fasermaterial enthält, wobei die Fasern der äußeren Mattenauflage mit 20-200 g Ni/m² belegt sind.

Für einen Schutz vor Blitzen bis zu 100 kA, $0,25 \cdot 10^6 A^2 \cdot s$ und 3,6 kA, 10 Coulombs reicht bereits eine Nickelauflage von 80 bis 140 g pro m² Fasermatte aus. Bevorzugt werden 90 bis 130 g eingesetzt. Um einen Schutz vor 200 kA-Blitzen zu erreichen, ist eine Nickelmenge von 140 bis 200 g pro m² erforderlich. Bevorzugt werden 130 bis 180 g pro m² eingesetzt.

Diese Werte sind deshalb so überraschend, da zum Erreichen eines vergleichbaren Blitzschutzes bedeutend höhere Mengen an Aluminium eingesetzt werden müssen, obwohl Nickel eine geringere elektrische Leitfähigkeit besitzt als Aluminium.

Bevorzugte Fasermatten sind Gewebe oder Gelege, die vorzugsweise aus graphitischen Kohlenstoff-Fasern oder Aramidfasern bestehen. Für den genannten Verwendungszweck kommen praktisch nur Filamentgarngewebe in Frage. Zur Verstärkung besonders der Ränder von Kohlenstoff-Filamentgarngeweben kann man Aramid-Filamentgarne verwenden.

Le A 23 161

Das Aufbringen des Metalls kann durch Bedampfen, Sputtern, galvanische oder naßchemisch-stromlose Abscheidung erfolgen. Bei der naßchemisch-stromlosen Beschichtung ist die Einzelfaser sehr gleichmäßig mit Metall umhüllt. Bei der Metallisierung eines Gewebes kommt es zu keinen Metallverklebungen im Faden und im Zwischenraum, wodurch die Flexibilität nur unwesentlich eingeschränkt wird. Selbst Gewebe, auf dem relativ viel Metall niedergeschlagen worden ist und dessen Oberflächenwiderstand gemessen nach DIN 54 345 unter 1 Ohm ist, haben ihren textilen Charakter weitgehend behalten.

Die Vernickelung der Verbundmaterialien erfolgt bevorzugt naßchemisch stromlos. Selbstverständlich kann auch insbesondere bei sehr hohen Nickelmengen eine galvanische Verstärkung der stromlos vernickelten Oberflächen durchgeführt werden. Bei Kohlenstoffasergeweben oder -gelegen ist auch eine rein galvanische Vernickelung durchführbar. Sie führt aber erwartungsgemäß zu einer starken Versprödung der Materialien.

Ganz bevorzugt ist ein naßchemisches stromloses Vernickelungsverfahren unter Verwendung von organometallischen Aktivatoren, wie sie beispielsweise in der DE-A 30 25 307 beschrieben sind.

Geeignete Kunststoffe, in welche die Fasermatten eingebettet werden, sind die heute im Flugzeugbau bevorzugten Duroplaste, wie Epoxid-, Maleinimid- und Polyimidharze.

Le A 23 161

Wegen der im folgenden beschriebenen Vorteile ist das Verbundmaterial besonders als Blitzschutzmaterial geeignet: Das im Vergleich zu Metall leichtere Material hält relativ hohe stoßartige Strombelastungen aus. Wiederholte Belastungen sind möglich. Das Material kann je nach zugrundegelegtem Risikofaktor "nach Maß" wirtschaftlich gefertigt werden. Es kann so ausgelegt werden, daß 200 kA-Blitze nicht zu einer Zerstörung des Bauteils führen. Bei 2 mm dicken Aluminiumblechen ist bekannt, daß bei Blitzeinschlag Löcher herausgeschmolzen werden und erst bei einer Aluminiumdicke von 10 mm keine Schäden mehr beobachtet werden. Die elektromagnetische Schutzwirkung bleibt bei dem erfindungsgemäßen Verbundmaterial auch nach dem Blitzeinschlag erhalten und elektrostatische Aufladungen werden weiter abgeleitet. Bauteile aus dem Verbundmaterial können elektrisch beheizt werden, wodurch beispielsweise eine Vereisung verhindert werden kann. Die Nickelschicht auf dem Gewebe vermeidet Korrosionsprobleme mit der Kohlenstoff-Faser. Beim direkten Kontakt zwischen Kohlenstoff-Faser und Aluminium werden Aluminiumcarbide gebildet. Wegen der hohen elektrischen Leitfähigkeit des metallisierten Gewebes kann auf zusätzlich eingebaute Aluminiumbleche oder Kupferdrahtnetze verzichtet werden. Außerdem kann durch eine Vernickelung eine Erhöhung der interlaminaren Scherfestigkeit der Verbundbauteile erreicht werden.

Le A 23 161

Die Prüfung auf Blitzschutzeignung erfolgt sowohl am metallisierten Gewebe als auch am fertigen Bauteil. Muster mit 95 mm Durchmesser werden zwischen zwei kreisrunden Metallringen eingespannt, die als Elektrode dienen. Das Gewebe liegt auf einer isolierenden Unterlage auf. Die Hochspannungselektrode von 10 mm Durchmesser wird entweder mit leichtem Druck gegen das Gewebe gepreßt (direkter Kontakt) oder in einem Abstand von 1 mm von der Gewebeoberfläche gehalten (Spalt). Im ersten Fall erfolgt der Stromübertritt in das Gewebe auf einer Fläche von ca. 0,8 cm², im zweiten Fall praxisnah über einen Lichtbogen, der sich zwischen Elektrodenkante und Gewebeoberfläche ausbildet.

Die in den nachfolgenden Beispielen beschriebenen Versuche wurden an einer Stromstoßanlage mit einer Kapazität von 20 µF und einer max. Ladespannung von 160 kV durchgeführt. Damit sind Stromstöße mit Scheitelwerten von über 230 kA erzeugbar. Die notwendigen Einrichtungen zur Strom- und Spannungsmessung sind in der Anlage integriert. Die Stromangaben beziehen sich auf den Scheitelwert der ersten Halbschwingung, die eine Dauer von etwa 20 µsec hat.

Die Untersuchungen erfolgen mit Stromstößen von 100 und 200 kA, Stromeinleitung jeweils mit direktem Kontakt oder über Lichtbogen. Um den Einfluß von Vorbeschädigungen zu eliminieren, wird für jede Strombelastung ein unbeanspruchtes Gewebestück in die Versuchseinrichtung eingespannt. Die Stromeinleitung über einen

Le A 23 161

Lichtbogen ergibt keine signifikanten Unterschiede. Die Gebiete, in denen ein Metallabtrag erfolgen könnte, sind etwa gleich groß.

Le A 23 161

## Beispiele

### Beispiel 1

Ein Kohlenstoff-Filamentgarngewebestück von der Größe 40 x 46 cm in Leinwandbindung L 1/1 mit einem Flächengewicht von 200 g/m² wird in eine Lösung von 0,25 g Butadienpalladiumdichlorid pro Liter 1,1,1-Trichlorethan getaucht und anschließend getrocknet. Anschließend wird es in einem stromlosen Vernicklungsbad, das pro Liter 30 g Nickelchlorid, 3 g Dimethylaminoboran und 10 g Zitronensäure enthält und mit Ammoniak auf pH 8,1 eingestellt wurde, bei Raumtemperatur 20 Minuten stromlos vernickelt. Das vernickelte Gewebe wird gewaschen, anschließend in verdünnte Schwefelsäure getaucht und dann galvanisch mit Nickel ca. 40 Minuten bei 60°C, 6 bis 8 Volt und einem elektrischen Strom von 40 A verstärkt. Anschließend wird das Gewebestück gespült und getrocknet. Die Gesamtnickelauflage beträgt 165 g/m².

Es wurden Prüfkörper aus Prepregs mit 6 Lagen des entsprechenden Kohlenstoff-Filamentgarngewebes in der Art hergestellt, daß das metallisierte Gewebestück die äußere Lage bildet. Der Prüfkörper wurde so in der Testanordnung angebracht, daß der Blitz immer zuerst in die oberste metallisierte Lage einschlug.

Die Tests wurden gemäß LIL-STD-1757, Test-Methode TO 2 "Lightning Qualification Tests Techniques for Aerospace Vehicles and Hardware" 17. Juni 1980 und

Le A 23 161

SAE AE4L Report "Lightning Test Waveform an Techniques
for Aerospace Vehicles and Hardware" 20. Juni 1978
durchgeführt.

Ein simulierter Lichtblitz von 200 kA, $2 \cdot 10^6 A^2 \cdot s$ (Zone 1 A) führte zu keiner durchgehenden Zerstörung des Kohlenstoffverbundkörpers. Die oberste metallisierte Lage ließ eine etwa 1 cm² große Einschlagstelle erkennen, bei der Teile der Metallschicht verdampft waren. Die darunter befindliche Kohlenstoffgewebelage war kaum beschädigt. Die anderen nicht metallisierten Kohlenstofflagen zeigten keinerlei Anzeichen einer Beschädigung.

## Beispiel 2

Ein Aramid-Filamentgarngewebe (Kevlar ®) in Leinwandbindung L 1/1 mit einem Flächengewicht von 80 g/m² wurde stromlos mit 80 g /m² Nickel gemäß DOS 31 39 313 metallisiert.

Die Blitzschutzeigenschaften des metallisierten Gewebes wurden gemäß Beispiel 1 getestet. Ein simulierter Blitz von 100 kA, $0,25 \cdot 10^6 A^2 \cdot s$ (Zone 2 A), führte zu keiner Zerstörung des Aramidgewebes, obwohl an der Einschlagstelle die Metallschicht verdampfte. Die 5 Lagen von Kohlenstoff-Filamentgewebe, die unter die metallisierten Kevlar-Gewebe angebracht waren, zeigten keinerlei Anzeichen von Zerstörung.

Le A 23 161

Beispiel 3

Ein Kohlenstoff-Filamentgarngewebe, das auch technischen Gründen Aramid-Filamentgarne enthielt, wurde stromlos, wie in Beispiel 2 beschrieben, 2 Stunden bei Raumtemperatur vernickelt. Die Nickelauflage betrug 105 g pro m². Prüfkörper auf diesem Material wurden simulierten Blitzen von 100 kA, 0,25 . $10^6$ $A^2$ . s und 3,6 kA, 10 Coulombs ausgesetzt. Außer einer geringen Beschädigung an der Einschlagstelle der Blitze konnte keine Zerstörung des Kohlenstoffgewebes festgestellt werden.

Simulierte Blitze von 200 kA (wie in Beispiel 1 beschrieben) zerstörten die erste Lage mit dem metallisierten Kohlenstoffgewebe im Verbundwerkstoff. Die darunter befindlichen nicht metallisierten Kohlenstoffgewebelagen zeigten äußerlich kein Anzeichen einer Beschädigung.

Le A 23 161

Patentansprüche

1. Verbundmaterial aus mehrlagigen Fasermatten in einer Kunststoffmatrix, dadurch gekennzeichnet, daß die Matten im wesentlichen aus einer Kohlenstoff-enthaltenden Faser bestehen und die Fasern der äußeren Mattenauflage mit 80-200g Nickel pro m² Fasermatte belegt sind.

2. Verbundmaterial gemäß Anspruch 1, dadurch gekennzeichnet, daß die Nickelauflage von 80 bis 140 g pro m² beträgt.

3. Verbundmaterial gemäß Anspruch 1, dadurch gekennzeichnet, daß die Nickelauflage 140-200 g pro m² beträgt.

4. Verbundmaterial gemäß Anspruch 1, dadurch gekennzeichnet, daß als Fasermaterialien Kohlenstofffasern oder Aramidfasern oder ein Gemisch aus beiden verwendet werden.

5. Verbundmaterial gemäß Anspruch 1, dadurch gekennzeichnet, daß die Vernickelung der Fasermaterialien naßchemisch stromlos oder galvanisch durchgeführt wird.

Le A 23 161

6. Verbundmaterial gemäß Anspruch 1, dadurch gekennzeichnet, daß die Fasern nach einer Aktivierung mit metallorganischen Verbindungen stromlos naßchemisch vernickelt sind.

7. Verbundmaterial gemäß Anspruch 1, dadurch gekennzeichnet, daß die Matrix aus Duorplasten, vorzugsweise aus Epoxid-, Polyimid- oder Maleinimid-Harzen besteht.

8. Verwendung von Verbundmaterials gemäß Ansprüchen 1 bis 7 als Blitzschutzmaterial im Flugkörperbau.

9. Verwendung des Verbundmaterials gemäß Ansprüchen 1 bis 7 mit Metallauflagen von 80-140 $g/m^2$ gegen Blitzeinwirkungen bis zu 100 kA.

10. Verwendung des Verbundmaterials gemäß Ansprüchen 1 bis 7 mit Metallauflagen von 140-200 $g/m^2$ gegen Blitzeinwirkungen bis zu 200 kA.

Le A 23 161

**EINSCHLÄGIGE DOKUMENTE**

EP 85100532.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>AT - B - 290 239</u> (CIBA-GEIGY AG)<br><br>* Anspruch; Beispiel 1 *<br><br>-- | 1,5-7 | C 08 J 5/04<br>B 32 B 15/14<br>C 23 C 18/32 |
| Y | <u>EP - A1 - 0 043 485</u> (BAYER AG)<br><br>* Ansprüche *<br><br>-- | 1,4-7 | C 23 C 18/20<br>C 25 D 3/12<br>C 25 D 5/56 |
| Y | <u>US - A - 4 349 859</u> (SANDERS)<br><br>* Gesamt *<br><br>---- | 1,4,7-10 | B 64 D 45/02<br>B 64 C 1/00 |

RECHERCHIERTE SACHGEBIETE (Int. Cl.4)

C 08 J

B 32 B

C 23 C

C 25 D

B 64 D

B 64 C

Der vorliegende Recherchenbericht wurde für alle Patentansprüche erstellt.

| Recherchenort | Abschlußdatum der Recherche | Prüfer |
|---|---|---|
| WIEN | 22-07-1985 | WEIGERSTORFER |